# EUROPÄISCHE PATENTANMELDUNG

(11) **EP 4 799 449 A1**
(43) Veröffentlichungstag der Anmeldung: **02.09.2026**
(21) Anmeldenummer: 25160298.3
(22) Anmeldetag: 26.02.2025
(51) Int. Cl.: A01B 59/041

(54) **HALTERUNG FÜR EINEN SEITENSTABILISATOR EINES DREIPUNKT-KRAFTHEBERS**

(71) Anmelder: Deere & Company, Moline, IL 61265 (US)
(72) Erfinder: SCHIBEL, ACHIM ROLAND, 68163 Mannheim (DE); HINGNE, ABHIJIT, 68163 Mannheim (DE); ECKSTEIN, CHRISTIAN, 68163 Mannheim (DE); FEIG, OLIVER, 68163 Mannheim (DE)
(74) Vertreter: Dehnhardt, Florian Christopher

(57) **Zusammenfassung**

Die Erfindung betrifft eine Halterung (42) für einen Seitenstabilisator (28) eines Dreipunkt-Krafthebers (10), wie er bei landwirtschaftlichen Traktoren (12) zur Anbringung landwirtschaftlicher Anbau- oder Zusatzgeräte Verwendung findet. Die Halterung (42) weist entlang einer Halterungslängsachse (44) einen gabelförmigen Befestigungsbereich (48) mit gegenüberliegenden Gabelenden (50) auf, die von miteinander fluchtenden Querbohrungen (52) zur Aufnahme eines Befestigungsbolzens (54) durchsetzt sind, der der Lagerung eines von dem Seitenstabilisator (28) umfassten Kugelgelenks (40) dient, wobei die miteinander fluchtenden Querbohrungen (52) eine senkrecht zur Halterungslängsachse (44) verlaufende Gelenkachse (54) vorgeben. Ferner weist die Halterung (42) entlang der Halterungslängsachse (46) eine an einem dem gabelförmigen Befestigungsbereich (48) gegenüberliegenden abgeflachten Befestigungsbereich (58) ausgebildete Montagefläche (60) zur Anlage an einem komplementär ausgebildeten Befestigungsflansch (62) eines Achstrichters (44) auf, deren Verlauf mit demjenigen der Gelenkachse (56) zusammenfällt, wobei der abgeflachte Befestigungsbereich (58) von einer Vielzahl von senkrecht zur Montagefläche (60) verlaufenden Befestigungsbohrungen (64) durchsetzt ist, die spiegelsymmetrisch in Bezug auf die Halterungslängsachse (46) angeordnet sind.

## Beschreibung

Der typischerweise im Bereich eines Differentialgehäuses des landwirtschaftlichen Traktors angeordnete Dreipunkt-Kraftheber umfasst ein hydraulisch betätigbares Hubwerk mit linken und rechten Hubarmen, die sich mittels zugehöriger Hydraulikzylinder heben und senken lassen, sowie linke und rechte Unterlenker, die an unteren Befestigungsstellen des Dreipunkt-Krafthebers vertikalschwenkbar gelagert und über zugehörige Hubstreben mit den Hubarmen bewegungsverbunden sind. Des Weiteren ist ein zentraler Oberlenker vorhanden, der an einer oberen Befestigungsstelle des Dreipunkt-Krafthebers vertikalschwenkbar aufgehängt ist. Sowohl die Unterlenker wie auch der Oberlenker weisen lösbare Kupplungshaken zur Aufnahme komplementärer Kupplungselemente eines daran anzubringenden landwirtschaftlichen Anbau- oder Zusatzgeräts auf.

Die Unterlenker sind an den unteren Befestigungsstellen derart angelenkt, dass diese in gewissem Umfang auch eine Seitwärtsbewegung zulassen. Dies ist unter anderem bei bodeneingreifenden Anbau- oder Zusatzgeräten von Bedeutung, um diesen eine Ausführung von seitlichen Ausweichbewegungen während der Bodenbearbeitung zu ermöglichen. Der Umfang der zulässigen Seitwärtsbewegung lässt sich hierbei mittels wenigstens eines Seitenstabilisators, der zwischen einem der beiden Unterlenker und einer weiteren Befestigungsstelle am landwirtschaftlichen Traktor verläuft, gezielt einschränken oder sogar vollständig blockieren. Letzteres ist bei der Durchführung von Transport- und Straßenfahren bei angehobenen Unterlenkern erforderlich, um ein unkontrolliertes Hin- und Herpendeln der Unterlenker insbesondere im Falle eines daran angebrachten Anbau- oder Zusatzgeräts zu unterbinden. Ein für diese Zwecke geeigneter Seitenstabilisator ist beispielsweise in der DE 10 2011 081 274 A1 beschrieben.

Genauer gesagt ist der Seitenstabilisator im Bereich eines ersten Stabilisatorendes mittels einer Befestigungsgabel an einem am Unterlenker ausgebildeten Befestigungsauge eingehängt und im Bereich eines zweiten Stabilisatorendes mittels eines Kugelgelenks an einer traktorseitigen Halterung gelagert. Die Halterung ist ihrerseits im Bereich einer Unterseite eines am Differentialgehäuse hervorspringenden Achstrichters des landwirtschaftlichen Traktors verschraubt.

Um den über den Seitenstabilisator auf die Halterung betriebsbedingt einwirkenden Kräften insbesondere bei Verwendung vergleichsweise schwerer Anbau- oder Zusatzgeräte gerecht zu werden, werden dementsprechend hohe Anforderungen an die Belastbarkeit der Struktur der Halterung wie auch der Verschraubung mit dem Achstrichter gestellt. Halterung und Verschraubung sind daher baulich dementsprechend massiv auszulegen.

Angesichts dessen ist es Aufgabe der vorliegenden Erfindung, eine Halterung der eingangs genannten Art dahingehend zu verbessern, dass diese sich durch einen verringerten Materialeinsatz bei unveränderter Belastbarkeit auszeichnet.

Diese Aufgabe wird durch eine Halterung für einen Seitenstabilisator eines Dreipunkt-Krafthebers mit den Merkmalen des Patentanspruchs 1 gelöst.

Die erfindungsgemäße Halterung für einen Seitenstabilisator eines Dreipunkt-Krafthebers weist entlang einer Halterungslängsachse einen gabelförmigen Befestigungsbereich mit gegenüberliegenden Gabelenden auf, die von miteinander fluchtenden Querbohrungen zur Aufnahme eines Befestigungsbolzens durchsetzt sind, der der Lagerung eines von dem Seitenstabilisator umfassten Kugelgelenks dient, wobei die miteinander fluchtenden Querbohrungen eine senkrecht zur Halterungslängsachse verlaufende Gelenkachse vorgeben. Ferner weist die Halterung entlang der Halterungslängsachse eine an einem dem gabelförmigen Befestigungsbereich gegenüberliegenden abgeflachten Befestigungsbereich ausgebildete Montagefläche zur Anlage an einem komplementär ausgebildeten Befestigungsflansch eines Achstrichters auf, deren Verlauf mit demjenigen der Gelenkachse zusammenfällt, wobei der abgeflachte Befestigungsbereich von einer Vielzahl von senkrecht zur Montagefläche verlaufenden Befestigungsbohrungen durchsetzt ist, die spiegelsymmetrisch in Bezug auf die Halterungslängsachse angeordnet sind. Die Verschraubung mit dem Achstrichter erfolgt mittels zugehöriger Gewindebolzen, die sich durch die Befestigungsbohrungen hindurch in entlang der Montagefläche ausgebildete Gewindebohrungen im Achstrichter erstrecken und darin mit einem vorgegebenen Anzugsmoment festgezogen sind.

Wird die Verschraubung der Halterung am Achstrichter derart positioniert, dass die Halterungslängsachse mit der Längsachse des Seitenstabilisators in dessen blockiertem Betriebszustand am Unterlenker in einer Linie liegt bzw. mit dieser fluchtet, so verteilen sich die auf die Halterung betriebsbedingt einwirkenden Kräfte aufgrund der Spiegelsymmetrie der Verschraubung gleichmäßig auf die einzelnen Gewindebolzen. Dies erlaubt es, die Halterung wie auch deren Verschraubung mit dem Achstrichter bei unveränderter Belastbarkeit entsprechend filigraner und damit materialsparender auszulegen.

Vorteilhafte Weiterbildungen der erfindungsgemäßen Halterung für einen Seitenstabilisator eines Dreipunkt-Krafthebers gehen aus den Unteransprüchen hervor.

Bevorzugt ist die Halterung in Bezug auf die Halterungslängsachse spiegelsymmetrisch ausgebildet. Dies berücksichtigt Situationen, in denen jedem der beiden Unterlenker ein eigener Seitenstabilisator zugeordnet ist, wobei sich die Halterung in einem solchen Fall beiderseits am Dreipunkt-Kraftheber einsetzen lässt. Die Herstellung von Teilen gleicher Bauart führt zu einem preislichen Vorteil aufgrund der damit verbundenen höheren Stückzahlen. Bei herkömmlichen Anordnungen ist hier die Verwendung seitenindividueller, mithin baulich unterschiedlicher Halterungen üblich.

Des Weiteren ist es denkbar, dass wenigstens eine der Befestigungsbohrungen mit der Halterungslängsachse zusammenfällt, also mittenzentriert auf dieser liegt. Zusätzlich oder alternativ können die Befestigungsbohrungen auch paarweise gegenüberliegend in jeweils identischem Abstand zur Halterungslängsachse angeordnet sein. Anzahl und/oder Anordnung der zur Verschraubung der Halterung am Achstrichter vorgesehenen Befestigungsbohrungen hängt dabei letztlich vom Umfang der über den Seitenstabilisator betriebsbedingt einwirkenden Kräfte ab.

Zur Erzielung möglichst hoher Festigkeitswerte handelt es sich bei der Halterung um eine als Stahlschmiedeteil oder Stahlgussteil hergestellte Metallstruktur. An dieser können Passungen im Bereich der gegenüberliegenden Gabelenden sowie der zur Anlage am Befestigungsflansch des Achstrichters vorgesehenen Montagefläche spanabhebend nachgearbeitet sein.

Dem Kraftverlauf der auf die Halterung betriebsbedingt einwirkenden Kräfte folgend, besteht zudem die Möglichkeit, dass ein den gabelförmigen Befestigungsbereich umfassender erster Halterungsabschnitt gegenüber einem den abgeflachten Befestigungsbereich umfassenden zweiten Halterungsabschnitt in Richtung der Gelenkachse gesehen abgewinkelt verläuft. Dies führt letztlich zu einer weiteren Entlastung der Verschraubung zwischen Halterung und Achtrichter.

Die erfindungsgemäße Halterung für einen Seitenstabilisator eines Dreipunkt-Krafthebers wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein erstes Ausführungsbeispiel einer erfindungsgemäßen Halterung zur Lagerung eines Seitenstabilisators an einem Dreipunkt-Kraftheber eines landwirtschaftlichen Traktors,
- Fig. 2: eine Gesamtansicht des mit der erfindungsgemäßen Halterung gemäß Fig. 2 ausgestatteten Dreipunkt-Krafthebers an einem landwirtschaftlichen Traktor,
- Fig. 3: eine ausschnittsweise Teildarstellung des Dreipunkt-Krafthebers gemäß Fig. 3 in einer Seitenansicht,
- Fig. 4: eine bauliche Abwandlung der erfindungsgemäßen Halterung entsprechend einem zweiten Ausführungsbeispiel,
- Fig. 5: eine bauliche Abwandlung der erfindungsgemäßen Halterung entsprechend einem dritten Ausführungsbeispiel, und
- Fig. 6: eine Teildarstellung eines dem Stand der Technik entsprechenden Dreipunkt-Krafthebers mit einer an einem Achstrichter eines landwirtschaftlichen Traktors angebrachten Halterung zur Lagerung eines Seitenstabilisators.

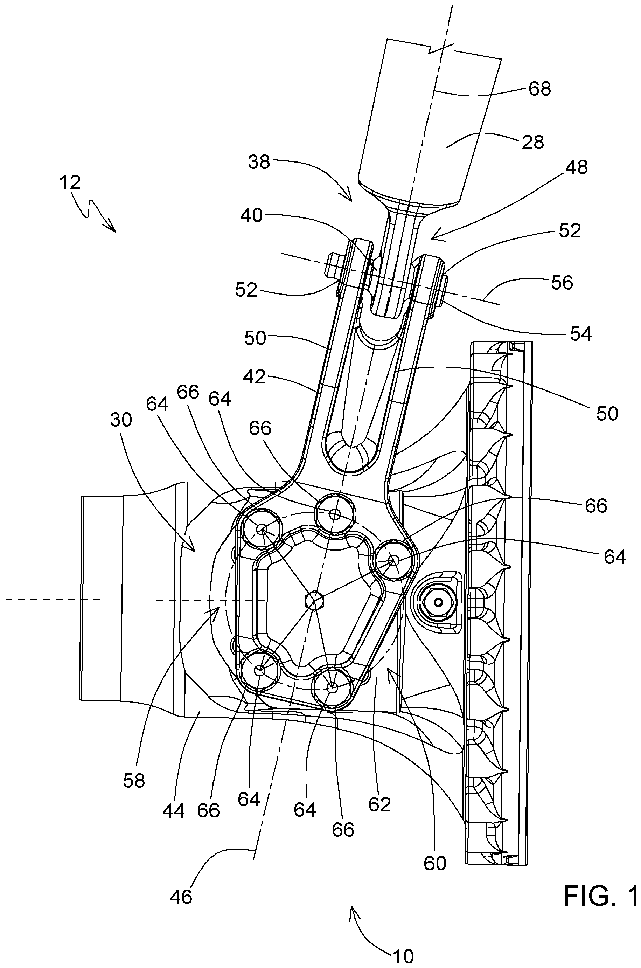

Fig. 1 zeigt ein erstes Ausführungsbeispiel einer erfindungsgemäßen Halterung zur Lagerung eines Seitenstabilisators an einem Dreipunkt-Kraftheber eines landwirtschaftlichen Traktors.

Wenn nicht anders angegeben, beziehen sich sämtliche Darstellungen auf eine Wiedergabe des Dreipunkt-Krafthebers 10 in Sichtrichtung der Unterseite des landwirtschaftlichen Traktors 12.

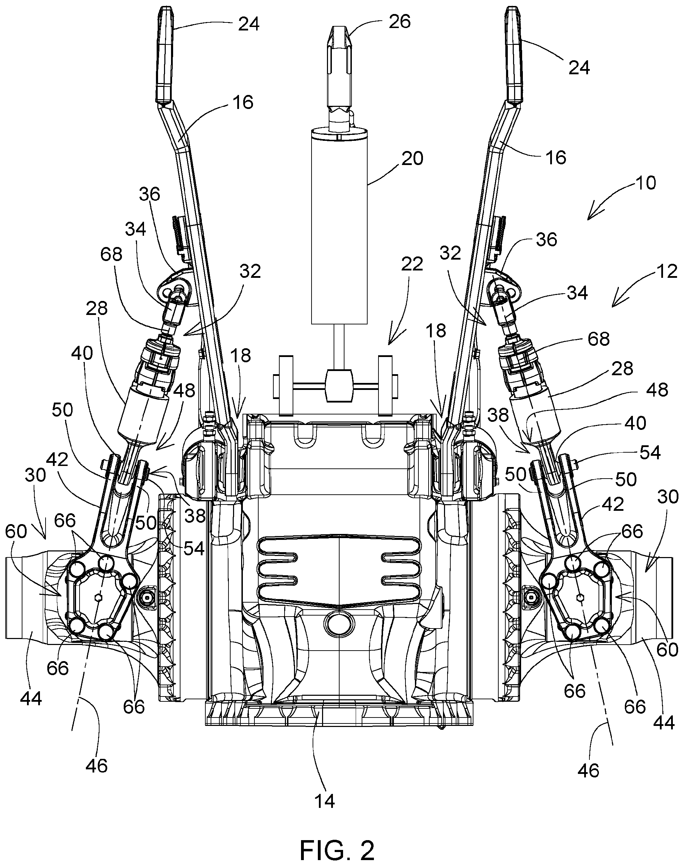

Eine Gesamtansicht des Dreipunkt-Krafthebers 10 am landwirtschaftlichen Traktor 12 ist ergänzend in Fig. 2 gezeigt. Demgemäß umfasst der im Bereich eines Differentialgehäuses 14 des landwirtschaftlichen Traktors 12 angeordnete Dreipunkt-Kraftheber 10 linke und rechte Unterlenker 16, die an unteren Befestigungsstellen 18 des Dreipunkt-Krafthebers 10 vertikalschwenkbar gelagert sind und sich mittels eines (nicht abgebildeten) hydraulisch betätigbaren Hubwerks auf Veranlassung eines Fahrers heben und senken lassen. Des Weiteren ist ein zentraler Oberlenker 20 vorhanden, der an einer oberen Befestigungsstelle 22 des Dreipunkt-Krafthebers 10 vertikalschwenkbar aufgehängt ist.

Sowohl die Unterlenker 16 wie auch der Oberlenker 20 weisen lösbare Kupplungshaken 24, 26 zur Aufnahme komplementärer Kupplungselemente eines daran anzubringenden landwirtschaftlichen Anbau- oder Zusatzgeräts (nicht abgebildet) auf.

Die Unterlenker 16 sind an den unteren Befestigungsstellen 18 derart angelenkt, dass diese in gewissem Umfang auch eine Seitwärtsbewegung zulassen. Dies ist gerade bei bodeneingreifenden Anbau- oder Zusatzgeräten von Bedeutung, um diesen eine Ausführung von seitlichen Ausweichbewegungen während der Bodenbearbeitung zu ermöglichen. Der Umfang der zulässigen Seitwärtsbewegung lässt sich hierbei mittels eines jeweiligen Seitenstabilisators 28, der zwischen einem der beiden Unterlenker 16 und einer weiteren Befestigungsstelle 30 am landwirtschaftlichen Traktor 12 verläuft, gezielt einschränken oder sogar vollständig blockieren. Letzteres ist bei der Durchführung von Straßenfahren bei angehobenen Unterlenkern 16 erforderlich, um ein unkontrolliertes Hin- und Herpendeln der Unterlenker 16 insbesondere im Falle eines daran angebrachten Anbau- oder Zusatzgeräts zu unterbinden.

Genauer gesagt ist jeder der beiden Seitenstabilisatoren 28 im Bereich eines ersten Stabilisatorendes 32 mittels einer Befestigungsgabel 34 an einem am Unterlenker 16 ausgebildeten Befestigungsauge 36 eingehängt und im Bereich eines zweiten Stabilisatorendes 38 mittels eines Kugelgelenks 40 an einer traktorseitigen Halterung 42 gelagert, wobei die Halterung 42 ihrerseits im Bereich einer Unterseite des am Differentialgehäuse 14 hervorspringenden Achstrichters 44 des landwirtschaftlichen Traktors 12 verschraubt ist.

Vorliegend sind die Halterungen 42 auf beiden Seiten des Dreipunkt-Krafthebers 10 baulich identisch, im Zuge der nachfolgenden Beschreibung soll daher jeweils lediglich auf eine der beiden Halterungen 42 Bezug genommen werden.

Wie in Fig. 1 zu erkennen ist, weist die Halterung 42 entlang einer Halterungslängsachse 46 einen gabelförmigen Befestigungsbereich 48 mit gegenüberliegenden Gabelenden 50 auf. Die Gabelenden 50 sind von miteinander fluchtenden Querbohrungen 52 zur Aufnahme eines Befestigungsbolzens 54 durchsetzt, der der Lagerung des von dem Seitenstabilisator 28 umfassten Kugelgelenks 40 dient. Hierbei geben die miteinander fluchtenden Querbohrungen 52 eine senkrecht zur Halterungslängsachse 46 verlaufende Gelenkachse 56 vor.

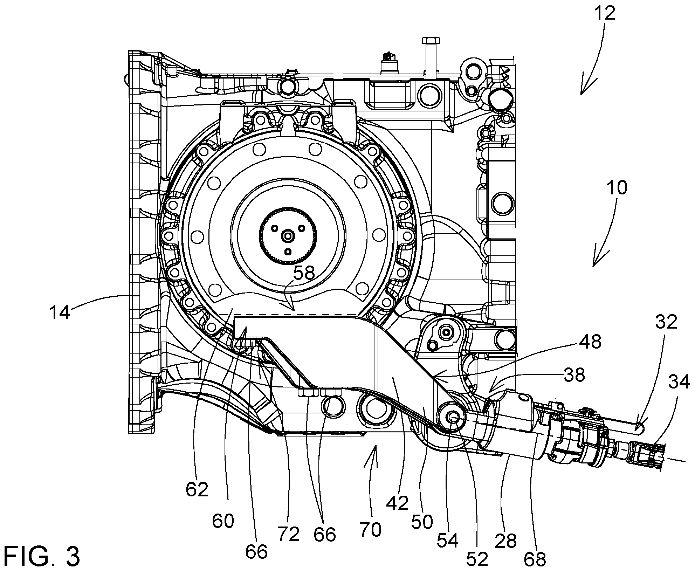

Ferner weist die Halterung 42 entlang der Halterungslängsachse 46 eine an einem dem gabelförmigen Befestigungsbereich 48 gegenüberliegenden abgeflachten Befestigungsbereich 58 ausgebildete Montagefläche 60 zur Anlage an einem komplementär ausgebildeten Befestigungsflansch 62 des Achstrichters 44 auf (siehe Fig. 3). Der Verlauf der Montagefläche 60 fällt mit demjenigen der Gelenkachse 56 zusammen, wobei der abgeflachte Befestigungsbereich 58 von einer Vielzahl von senkrecht zur Montagefläche 60 verlaufenden Befestigungsbohrungen 64 durchsetzt ist, die spiegelsymmetrisch in Bezug auf die Halterungslängsachse 46 angeordnet sind. Die Verschraubung erfolgt mittels zugehöriger Gewindebolzen 66, die sich durch die Befestigungsbohrungen 64 hindurch in entlang der Montagefläche 60 ausgebildete Gewindebohrungen im Achstrichter 44 erstrecken und darin mit einem vorgegebenen Anzugsmoment festgezogen sind.

Wird die Verschraubung der Halterung 42 entsprechend der Darstellung in Fig. 1 bzw. 2 am Achstrichter 44 derart positioniert, dass die Halterungslängsachse 46 mit der Längsachse 68 des Seitenstabilisators 28 in dessen blockiertem Betriebszustand am Unterlenker 16 in einer Linie liegt bzw. mit dieser fluchtet, so werden die auf die Halterung 42 betriebsbedingt einwirkenden Kräfte aufgrund der Spiegelsymmetrie der Verschraubung gleichmäßig auf die von dieser umfassten Gewindebolzen 66 verteilt. Dies erlaubt es, die Halterung 42 wie auch deren Verschraubung mit dem Achstrichter 44 bei unveränderter Belastbarkeit entsprechend filigraner und damit materialsparender auszulegen.

Zur Erzielung möglichst hoher Festigkeitswerte handelt es sich bei der Halterung 42 um eine als Stahlschmiedeteil oder Stahlgussteil hergestellte Metallstruktur. Passungen im Bereich der gegenüberliegenden Gabelenden 50 sowie der zur Anlage am Befestigungsflansch 62 des Achstrichters 44 vorgesehenen Montagefläche 60 sind an dieser spanabhebend nachgearbeitet.

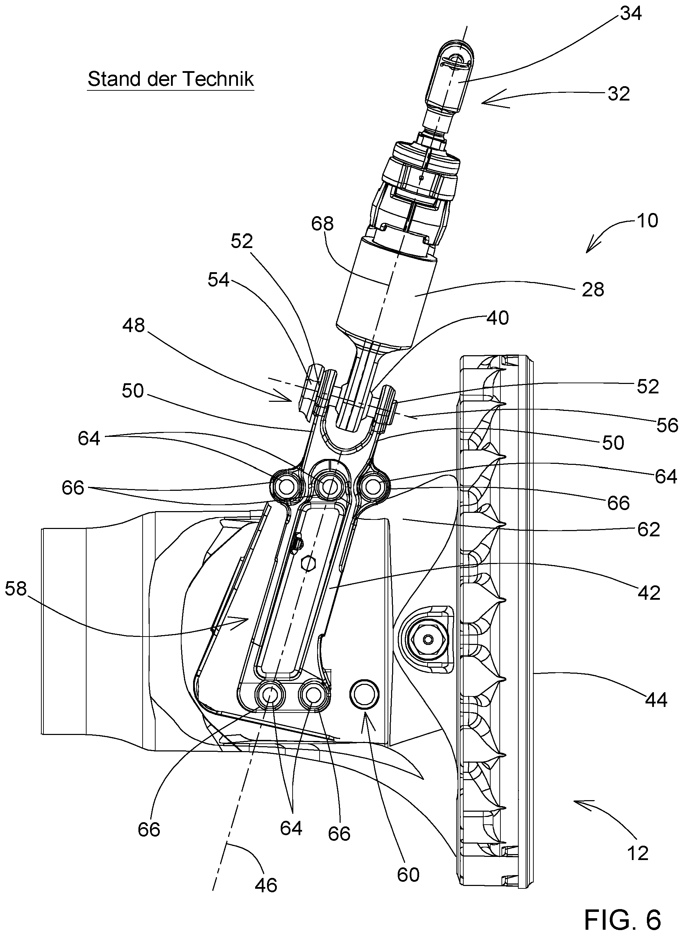

Die Halterung 42 ist in Bezug auf die Halterungslängsachse 46 baulich spiegelsymmetrisch ausgebildet. Dies berücksichtigt Situationen, in denen (wie im Falle der vorliegenden Beispiele) jedem der beiden Unterlenker 16 ein eigener Seitenstabilisator 28 zugeordnet ist, wobei sich die Halterung 42 in einem solchen Fall beiderseits am Dreipunkt-Kraftheber 10 gleichermaßen einsetzen lässt. Die Herstellung von Teilen gleicher Bauart führt zu einem preislichen Vorteil aufgrund der damit verbundenen höheren Stückzahlen. Bei herkömmlichen Anordnungen ist hier die Verwendung seitenindividueller, mithin baulich unterschiedlicher Halterungen 42 üblich (siehe hierzu Fig. 6).

Dem Kraftverlauf der auf die Halterung 42 betriebsbedingt einwirkenden Kräfte folgend, ist entsprechend Fig. 3 vorgesehen, dass ein den gabelförmigen Befestigungsbereich 48 umfassender erster Halterungsabschnitt 70 gegenüber einem den abgeflachten Befestigungsbereich 58 umfassenden zweiten Halterungsabschnitt 72 in Richtung der Gelenkachse 56 gesehen abgewinkelt verläuft. Dies führt letztlich zu einer weiteren Entlastung der Verschraubung zwischen Halterung 42 und Achtrichter 44.

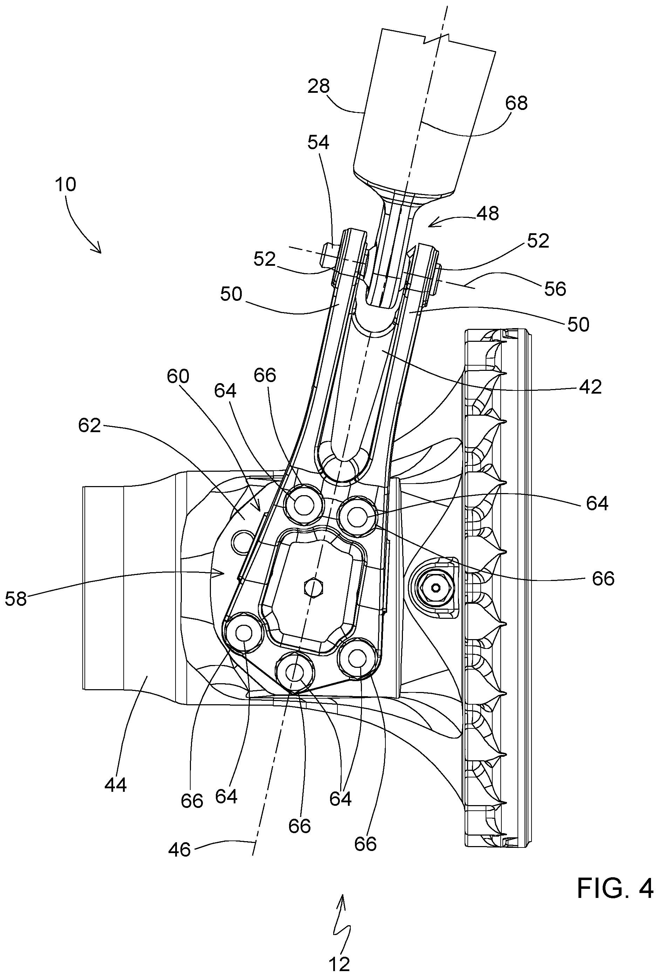

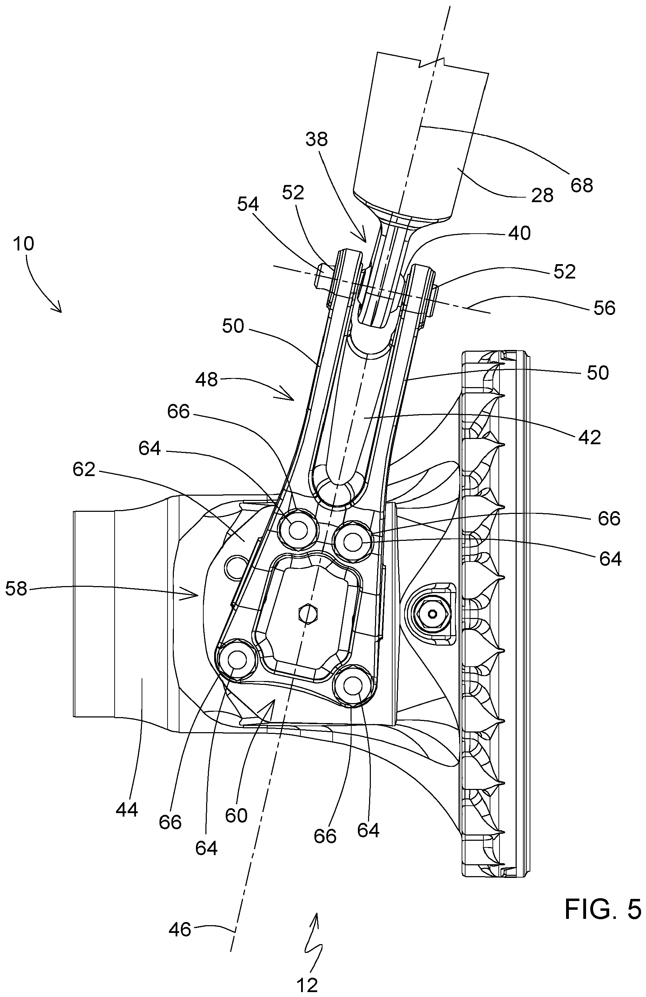

In Fig. 4 und 5 sind bauliche Abwandlungen der Halterung 42 entsprechend eines zweiten und dritten Ausführungsbeispiels wiedergeben. Diese unterscheiden sich von dem in Fig. 1 wiedergegebenen ersten Ausführungsbeispiel unter anderem hinsichtlich Anzahl und/oder Anordnung der zur Verschraubung vorgesehenen Befestigungsbohrungen 64 bzw. Gewindebolzen 66. Die Befestigungsbohrungen 64 sind hierbei in den Darstellungen durch die Köpfe der Gewindebolzen 66 verdeckt und daher strichliniert angedeutet. Der Vollständigkeit halber sei angemerkt, dass die beschriebenen Ausführungen der Halterung 42 lediglich beispielhaft zu verstehen sind, mithin auch eine beliebige andere Anzahl und/oder Anordnung von Befestigungsbohrungen 64 bzw. Gewindebolzen 66 vorgesehen sein kann.

Beispielgemäß fällt im Falle des ersten und zweiten Ausführungsbeispiels wenigstens eine der Befestigungsbohrungen 64 mit der Halterungslängsachse 46 zusammen, liegt also mittenzentriert auf dieser. Die übrigen Befestigungsbohrungen 64 sind paarweise gegenüberliegend in jeweils identischem Abstand zur Halterungslängsachse 46 angeordnet. Im Falle des dritten Ausführungsbeispiels sind ausschließlich paarweise angeordnete Befestigungsbohrungen 64 vorhanden. Anzahl und/oder Anordnung der zur Verschraubung der Halterung 42 am Achstrichter 44 vorgesehenen Befestigungsbohrungen 64 bzw. Gewindebolzen 66 hängt dabei letztlich vom Umfang der über den Seitenstabilisator 28 betriebsbedingt einwirkenden Kräfte ab.

Zum Vergleichszwecken ist in Fig. 6 im Rahmen einer Teildarstellung ein dem Stand der Technik entsprechender Dreipunkt-Kraftheber 10 mit einer an einem Achstrichter 44 eines landwirtschaftlichen Traktors 12 angebrachten Halterung 42 zur Lagerung eines Seitenstabilisators 28 veranschaulicht. Nicht nur die Halterung 42 selbst, sondern auch die Verschraubung ist bezüglich der Halterungslängsachse 46 asymmetrisch, was zur Folge hat, dass die auf die Halterung 42 betriebsbedingt einwirkenden Kräfte ungleichmäßig auf die von dieser umfassten Gewindebolzen 66 verteilt werden.

## Patentansprüche

1. Halterung für einen Seitenstabilisator eines Dreipunkt-Krafthebers, aufweisend entlang einer Halterungslängsachse (46)
einen gabelförmigen Befestigungsbereich (48) mit gegenüberliegenden Gabelenden (50) die von miteinander fluchtenden Querbohrungen (52) zur Aufnahme eines Befestigungsbolzens (54) durchsetzt sind, der der Lagerung eines von dem Seitenstabilisator (28) umfassten Kugelgelenks (40) dient, wobei die miteinander fluchtenden Querbohrungen (52) eine senkrecht zur Halterungslängsachse (46) verlaufende Gelenkachse (56) vorgeben, und
eine an einem dem gabelförmigen Befestigungsbereich (48) gegenüberliegenden abgeflachten Befestigungsbereich (58) ausgebildete Montagefläche (60) zur Anlage an einem komplementär ausgebildeten Befestigungsflansch (62) eines Achstrichters (44), deren Verlauf mit demjenigen der Gelenkachse (56) zusammenfällt, wobei der abgeflachte Befestigungsbereich (58) von einer Vielzahl von senkrecht zur Montagefläche (60) verlaufenden Befestigungsbohrungen (64) durchsetzt ist, die spiegelsymmetrisch in Bezug auf die Halterungslängsachse (46) angeordnet sind.

2. Halterung nach Anspruch 1, **gekennzeichnet durch** eine in Bezug auf die Halterungslängsachse (46) spiegelsymmetrische Ausbildung.

3. Halterung nach Anspruch 1 oder 2, **dadurch gekennzeichnet, dass** wenigstens eine der Befestigungsbohrungen (64) mit der Halterungslängsachse (46) zusammenfällt.

4. Halterung nach wenigstens einem der vorhergehenden Ansprüche, **gekennzeichnet durch** als Stahlschmiedeteil oder Stahlgussteil hergestellte Metallstruktur.

5. Halterung nach wenigstens einem der vorhergehenden Ansprüche, **dadurch gekennzeichnet, dass** ein den gabelförmigen Befestigungsbereich (48) umfassender erster Halterungsabschnitt (70) gegenüber einem den abgeflachten Befestigungsbereich (58) umfassenden zweiten Halterungsabschnitt (72) in Richtung der Gelenkachse (56) gesehen abgewinkelt verläuft.
